(19) Europäisches Patentamt
European Patent Office
Office européen des brevets

(11) Veröffentlichungsnummer: **0 173 989**
**A2**

# (12) EUROPÄISCHE PATENTANMELDUNG

(21) Anmeldenummer: **85111027.0**

(22) Anmeldetag: **02.09.85**

(51) Int. Cl.[4]: **C 08 K 5/01**
C 08 L 21/00

(30) Priorität: **06.09.84 DE 3432748**

(43) Veröffentlichungstag der Anmeldung:
**12.03.86 Patentblatt 86/11**

(84) Benannte Vertragsstaaten:
**AT BE DE FR GB IT NL SE**

(71) Anmelder: **Chemische Fabrik Wibarco GmbH**
**Hauptstrasse 21**
**D-4530 Ibbenbueren 1(DE)**

(72) Erfinder: **Segnitz, Adolph, Dr.**
**Weimarer Strasse 13**
**D-4530 Ibbenbueren(DE)**

(72) Erfinder: **Hovestadt, Alfred, Dr.**
**Rudolf-Virchow-Strasse 21**
**D-4530 Ibbenbueren(DE)**

(72) Erfinder: **Krekel, Georg, Dr.**
**Hunrodstrasse 35**
**D-3500 Kassel(DE)**

(72) Erfinder: **Paulus, Gerhard, Dr.**
**Roonstrasse 1**
**D-6940 Weinheim(DE)**

(72) Erfinder: **Queins, Hubertus, Dr.**
**Leininger Strasse 7**
**D-6701 Freinsheim(DE)**

(72) Erfinder: **Schoeppl, Hubert, Dr.**
**Zinkgraefstrasse 58**
**D-6940 Weinheim(DE)**

(54) **Diphenylalkane als Weichmacher für Kautschuktypen.**

(57) Weichmacher für natürlichen oder synthetischen Kautschuk, bestehend aus oder enthaltend als Hauptmenge Diphenylalkane der Formel I

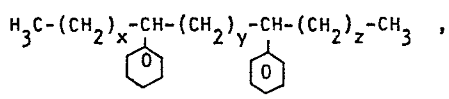

in der die Alkylkette linear ist und in der x, y und z die Zahlen o bis 13 und die Summe von x, y und z 4 bis 13 bedeuten.

EP 0 173 989 A2

Croydon Printing Company Ltd

Diphenylalkane als Weichmacher für Kautschuktypen

Die Erfindung betrifft einen Weichmacher für natürlichen oder synthetischen Kautschuk und ein Verfahren zu seiner Herstellung.

Weichmacher sind unentbehrliche Hilfsmittel in der Kautschukverarbeitung. Dies gilt sowohl für Naturkautschuk als auch für synthetischen Kautschuk, bei denen mit Hilfe von Weichmachern bestimmte gewünschte physikalische Eigenschaften eingestellt werden können. Weichmacher verbessern die Verarbeitbarkeit der Kautschukrohmasse, beeinflussen ihre Vulkanisationseigenschaften und können auch als Verstreckungsmittel dienen. Weiterhin werden durch Weichmacher Eigenschaften des Kautschuks, wie Elastizität, Plastizität und Wärmealterungs- und Kälteverhalten günstig beeinflußt.

Wie Ullmanns Encyklopädie der technischen Chemie, 4. Aufl., Band 13, Seite 654 ff beschreibt, sind sowohl synthetische Weichmacher als auch Weichmacher natürlichen Ursprungs in Gebrauch. Als Weichmacher natürlichen Ursprungs werden beispielsweise Mineralöle, Fettsäuren, Fette und Öle, tierischer Leim, Harze und Steinkohlenteerpech eingesetzt. Mit Weichmachern natürlichen Ursprungs lassen sich jedoch nur in sehr begrenztem Umfang definierte Eigenschaften des Kautschuks einstellen. Weiterhin sind besimmte Kautschuktypen, wie beispielsweise Nitril- und Chloroprenkautschuk, mit Mineralölen nicht verträglich.

Eine definierte Beeinflussung der Eigenschaften des Kautschuks läßt sich besser mit synthetischen Weichmachern erreichen. Zu diesen Produkten zählen beispielsweise Ether, Ester, Chlorkohlenwasserstoffe, Polyester aus Sebacinsäure, Adipinsäure und 1,2-Propylenglykol sowie 1,2-Polymerisationsprodukte des Crotonaldehyds. Auch ein- und mehrfach alkylierte Benzole sind als Weichmacher für Kautschuk bekannt.

Der Erfindung liegt die Aufgabe zugrunde, ein Mittel zu finden, das gute Weichmacher-Eigenschaften aufweist und Kautschuk ein günstiges Wärmealterungs- und Kälteverhalten bei gleichzeitig hoher Elastizität und Plastizität verleiht.

Diese Aufgabe wird erfindungsgemäß mit einem Weichmacher für natürlichen oder synthetischen Kautschuk, bestehend aus oder enthaltend als Hauptmenge Diphenylalkane der Formel I

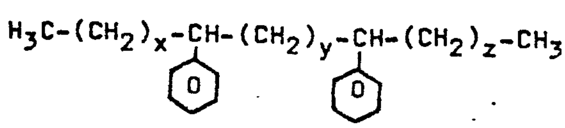 ,

in der die Alkylkette linear ist und in der x, y und z die Zahlen 0 bis 13 und die Summe von x, y und z 4 bis 13 bedeuten, gelöst.

Insbesondere sind Weichmacher der genannten Art geeignet, bei denen mindestens ein Phenylrest am ß-C-Atom der linearen Alkylgruppe gebunden ist.

Die Herstellung der erfindungsgemäß zu verwendenden Diphenylalkane erfolgt besonders vorteilhaft aus dem Destillationsrückstand, der bei der technischen Synthese linearer Alkylbenzole anfällt. Dieser Rückstand besteht hauptsächlich aus einem Gemisch von Diphenylalkanen, Alkyl- und Dialkylbenzolen. Der Siedebereich der Diphenylalkane liegt etwa 60 bis 70°C über dem der Alkylbenzole und unterhalb dem der Dialkylbenzole, so daß sich die Diphenylalkane durch fraktionierte Destillation von den Alkyl- bzw. Dialkylbenzolen leicht abtrennen lassen. Die Fraktion der Diphenylalkane wird aus diesem Gemisch vorteilhaft bei einem Druck von 20 mbar und einer Temperatur von 230 bis 260°C abgetrennt. Dazu wird auch auf die Veröffentlichung J. Schulze u. M. Weiser, Chem. Industrie, Band 36, S. 752 (1984) verwiesen.

Die nach diesen Verfahren erhaltenen Diphenylalkane weisen gegenüber den aus dem Stand der Technik bekannten ein- oder mehrfach alkylierten Benzolen ein größeres Verhältnis von aromatischen zu aliphatischen Kohlenwasserstoffgruppen auf. Die Paraffinkette der erfindungsgemäßen Weichmacher ist unverzweigt, wobei vorzugsweise wenigstens ein Phenylrest am zweiten C-Atom der linearen Alkylgruppe angeordnet ist.

Diese besonderen strukturellen Eigenschaften der Weichmacher der Erfindung bedingen vermutlich ihre besonderen Wirkungen in Kautschukmaterialien. Weichmacher der Erfindung lassen sich sowohl in Naturkautschuk (NR) als auch in synthetischem Kautschuk (SR), wie beispielsweise cis-Polybutadien, chlorsulfoniertes Methylen-, Isobutylen-Isopren- und Chloropren-Kautschuk einarbeiten. Besonders geeignet sind sie für Ethylen-, Propylen-, Styrol-Butadien- und Naturkautschuk (NR). Bewährt hat es sich, die Weichmacher der Erfindung in Mengen von 10 bis 200 Teilen, bezogen auf 100 Teile Kautschuk, in die Rohkautschukmasse einzuarbeiten, wobei diese Einarbeitung in an sich bekannter Weise, beispielsweise durch Mischen im Innenmischer oder auf einem Walzwerk erfolgt. Die folgenden Daten belegen als Beispiel einer Meßreihe die hervorragenden Eigenschaften der mit einem erfindungsgemäßen Weichmacher ausgerüsteten Kautschuktypen:

Es wird ein Weichmacher eingesetzt, der bei einer Temperatur von 230 bis 260°C und einem Druck von 20 mbar aus einem Schweralkylat abdestilliert worden ist. Dieser Weichmacher wird in einer Menge von beispielsweise 20 Teilen, bezogen auf 100 Teile Naturkautschuk oder Styrolbutadienkautschuk, oder in 50 Teilen, bezogen auf 100 Teile Ethylenpropylenkautschuk in die Kautschukrohmasse eingearbeitet.

1. Wirkung in Naturkautschuk

| | | |
|---|---|---|
| Plastizität | 2.600 g | bei 30°C |
| Elastizität | 31 % | |
| Plastizität | 625 g | bei 80°C |
| Elastizität | 11 % | |
| Plastizität ML 4 | 34,5 | Mooney E |
| Anvulkanisationszeit $t_5$ | 35,2 | |
| Anvulkanisationsgeschwindigkeit V 30 | 6,5 | Mooney E/min |
| 10 % Anvulkanisation | 10,5 min ) | |
| 90 % " | 27,5 min ) | bei 140°C |
| Schubkraft max. | 18,7 N ) | |
| Spannungswert 300 % | 6,7 N/mm² ) | |
| Festigkeit | 22,9 N/mm² ) | |
| Bruchdehnung | 622 % ) | nach 30 min Vulka- |
| Elastizität | 48 % ) | nisation bei 140°C |
| Härte | 53° Shore A ) | |

Wärmealterung (48 h bei 100°C):

| | |
|---|---|
| Spannungswert 300 % | 9,3 N/mm² ) |
| Festigkeit | 17,0 N/mm² ) |
| Bruchdehnung | 474 % |
| Alterungsresistenz | 56,6 % |
| Elastizität | 45 % |
| Härte | 57° Shore A |

Ozonalterung (dynamisch):
Nach 1 Stunde 50 pphm und 1 Stunde 200 pphm Exposition zeigten sich keine besonderen Effekte gegenüber der 0-Probe.

Kältetest:

Torsionsprüfung

| | |
|---|---|
| Glasübergangstemperatur | -50°C |
| Glastemperatur | -60°C |
| Brittlenes-Point | |
| Bruchtemperatur | -60°C |

Lagerungsversuch:

Über 4 Wochen: Ein Ausschwitzen konnte nicht beobachtet werden.

2. Wirkung in Styrolbutadienkautschuk (SBR)

| | | |
|---|---|---|
| Plastizität | 1.800 g ) | bei 30°C |
| Elastizität | 15 % ) | |

| | | |
|---|---|---|
| Plastizität | 500 g ) | bei 80°C |
| Elastizität | 14 % ) | |

| | | |
|---|---|---|
| 10 % Anvulkanisation | 12 min ) | |
| 90 % " | 26,5 min ) | bei 150°C |
| Schubkraft max. | 20,1 N ) | |

| | | |
|---|---|---|
| Spannungswert 300 % | 6,7 $N/mm^2$ ) | |
| Festigkeit | 16,6 $N/mm^2$ ) | |
| Bruchdehnung | 572 % ) | nach 30 min Vulkanisation bei 150°C |
| Elastizität | 39 % ) | |
| Härte | 55° Shore A ) | |

Wärmealterung (100 h bei 120°C):

| | |
|---|---|
| Spannungswert 300 % | 17,9 $N/mm^2$ ) |
| Festigkeit | 11,3 $N/mm^2$ ) |
| Bruchdehnung | 200 % |
| Alterungsresistenz | 23,8 % |
| Elastizität | 36 % |
| Härte | 66° Shore A |

Kältetest:

Torsionsprüfung

| | |
|---|---|
| Glasübergangstemperatur | -43°C |
| Glastemperatur | -53°C |
| Brittlenes-Point | |
| Bruchtemperatur | -56°C |

Spritzbarkeit:
Spiralform Austrieb 30
Lagerungsversuch über 4 Wochen:
kein Ausschwitzen beobachtet.

3. Wirkung in Ethylenpropylenkautschuk (EPDM)

| | | |
|---|---|---|
| Plastizität | 750 g | ) bei 80°C |
| Elastizität | 9 % | ) |

| | | |
|---|---|---|
| Plastizität ML-Minimum | 36 Mooney-E | ) bei 120°C |
| Anvulkanisationszeit $t_5$ | 8,3 min | ) |
| Anvulkanisationsgeschwindigkeit V 30 | 8,3 Mooney-E/min | ) |

| | | |
|---|---|---|
| Spannungswert 300 % | 11,8 $N/mm^2$ | ) nach 15 min |
| Festigkeit | 12,1 $N/mm^2$ | ) Vulkanisa- |
| Bruchdehnung | 328 % | ) tion bei |
| Elastizität | 31 % | ) 160°C |
| Härte | 74° Shore A | ) |

Kältetest:
Torsionsprüfung

| | |
|---|---|
| Glasübergangstemperatur | -47°C |
| Glastemperatur | -59°C |

Brittlenes-Point

| | |
|---|---|
| Bruchtemperatur | -60°C |

Lagerungsversuch über 4 Wochen:
kein Ausschwitzen beobachtet.

Die mit den Weichmachern der Erfindung erzielten Vorteile bestehen insbesondere darin, daß sich die mit dem Weichmacher ausgerüstete Kautschukrohmasse vulkanisationsneutral verhält, daß der daraus genommene Kautschuk ein ausgezeichnetes Wärmealterungs- und Kälteverhalten sowie eine hohe Elastizität und Plastizität aufweist.

Patentansprüche

1. Verwendung von Diphenylalkanen der Formel I

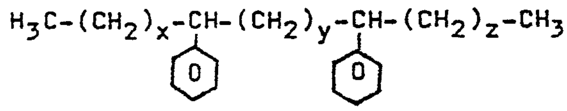 ,

in der die Alkylkette linear ist und in der x, y und z die Zahlen 0 bis 13 und die Summe von x, y und z 4 bis 13 bedeuten als Weichmacher für natürlichen oder synthetischen Kautschuk.

2. Verwendung von Diphenylalkanen nach Anspruch 1, dadurch gekennzeichnet, daß mindestens ein Phenylrest am ß-C-Atom der linearen Alkylgruppe gebunden ist.

3. Verwendung von Diphenylalkanen gemäß Anspruch 1.

4. Verfahren zur Herstellung der Diphenylalkane gemäß Ansprüche 1 bis 2, dadurch gekennzeichnet, daß man die Diphenylalkane der Formel I bei einer Temperatur von 230 bis 260°C und einem Druck von etwa 20 mbar aus dem bei der Produktion von linearen Alkylbenzolen anfallenden Schweralkylat durch Destillation gewinnt.